# EUROPÄISCHE PATENTSCHRIFT

(11) **EP 3 110 647 B1**
(45) Veröffentlichungstag und Bekanntmachung des Hinweises auf die Patenterteilung: **28.03.2018**
(21) Anmeldenummer: 15706443.7
(22) Anmeldetag: 20.02.2015
(51) Int. Cl.: B60K 15/03, B60K 13/04, B60S 1/50, F28F 9/00, F01N 3/20

(54) **MEHRKAMMERBEHÄLTER**
MULTI-CHAMBER CONTAINER
RÉSERVOIR À PLUSIEURS CHAMBRES

(30) Priorität: 28.02.2014 DE 102014002688
(43) Veröffentlichungstag der Anmeldung: 04.01.2017
(73) Patentinhaber: Kautex Textron GmbH & Co. KG, 53229 Bonn (DE)
(72) Erfinder: KARSCH, Ulrich, 53859 Niederkassel (DE); EBERHARDT, Agnes, 53225 Bonn (DE); WILLIAMS, Brent Jerome, Troy, Michigan 48083 (US)
(74) Vertreter: Kierdorf Ritschel Richly
(86) Internationale Anmeldenummer: PCT/EP2015/053571
(87) Internationale Veröffentlichungsnummer: WO 2015/128249

(56) Entgegenhaltungen:
- WO-A1-2010/066184
- WO-A1-2014/094919
- DE-A1-102009 009 676
- US-A1- 2004 142 232

## Beschreibung

Die Erfindung betrifft einen Mehrkammerbehälter aus Kunststoff, vorzugsweise aus thermoplastischem Kunststoff, als Betriebsflüssigkeitsbehälter für ein Kfz, welcher wenigstens zwei Kammern umfasst, die als getrennte Teilvolumina ausgebildet sind. Derartige Mehrkammerbehälter sind im Stand der Technik grundsätzlich bekannt, beispielsweise aus der DE 196 44 464 B4.

Die DE 196 44 464 betrifft einen Kraftstoffbehälter für ein Kraftfahrzeug, mit Bauteilen zur Kraftstoffförderung und zur Kraftstoffaufbereitung und mit einem Zusatzbehälter, der außerhalb des Kraftstoffbehälters an einer Gehäusewand des Kraftstoffbehälters befestigt ist, wobei im Kraftstoffbehälter und im Zusatzbehälter jeweils mindestens eine Öffnung ausgebildet ist und die Öffnungen über mindestens eine Dichtung miteinander verbunden sind und wobei in dem Zusatzbehälter die für die Kraftstoffförderung und Kraftstoffaufbereitung notwendigen Bauteile angeordnet sind. Bei dieser Anordnung der Behälterkammern ist ein wesentlicher Gesichtspunkt die Austauschbarkeit des Zusatzbehälters im Reparaturfall.

Die beiden von dem Hauptbehälter und dem Zusatzbehälter gebildeten Teilvolumina kommunizieren miteinander über eine gemeinsame Behälteröffnung, im Bereich dieser Öffnung sind die Behälter beispielsweise über ein Bajonettverschluss miteinander verbunden, der bei Bedarf lösbar ist und gleichzeitig die erforderliche Halte- und Dichtkraft bereitstellt.

Neben einer solchen Behälteranordnung sind auch Mehrkammertanks bekannt, bei denen mehrere Kammern innerhalb eines die Kammern gemeinsam umschließenden Gehäuses angeordnet sind.

So ist beispielsweise aus der EP 0 882 177 B1 ein Ventilatorgehäuse für ein Kfz bekannt, welches einstückig aus thermoplastischem Kunststoff ausgebildet ist und als Kombinationsbehälter für Kühlflüssigkeit und Wischwasser ausgebildet ist. Das Gehäuse ist durch eingezogene Zwischenwände beziehungsweise abgequetschte Bereiche des gemeinsamen Gehäusekörpers in unterschiedliche Kammern unterteilt. Insbesondere durch die Einziehungen und Zwischenwände wird die gesamte Behälteranordnung verhältnismäßig steif, so dass im Falle der Einwirkung aufprallbedingter Kräfte eine Rissbildung in Zwischenwänden oder gar in der die Kammern umschließenden Gehäusewand nicht ausgeschlossen werden kann. Aus DE10 2009 009676 A1 ist ein Mehrkammerbehälter gemäss der Oberbegriff des Anspruchs 1 bekannt. Aus DE 10 2010 019423 A1 ist ein Mehrkammerbehälter gemäss der Oberbegriff des Anspruchs 2 bekannt. Der Erfindung liegt daher die Aufgabe zugrunde, einen Mehrkammerbehälter bereitzustellen, der insbesondere erhöhten Sicherheitsanforderungen bei Einwirkung unfallbedingter Kräfte stand hält.

Die Aufgabe wird gelöst mit den Merkmalen des Anspruchs 1. Vorteilhafte Ausgestaltungen der Erfindung ergeben sich aus den Unteransprüchen.
Nach einem Gesichtspunkt der Erfindung ist ein Mehrkammerbehälter aus Kunststoff vorgesehen, vorzugsweise aus thermoplastischem Kunststoff, als Betriebsflüssigkeitsbehälter für ein Kfz, der wenigstens zwei Kammern umfasst, die als getrennte Volumina wenigstens nicht unmittelbar miteinander in Fluidverbindung stehen und die jeweils zur Aufnahme einer anderen Betriebsflüssigkeit ausgewählt aus einer Gruppe umfassend Kraftstoff, Schmiermittel, Kühlmittel, Reinigungsflüssigkeit, Reduktionsmittel für die Abgasentstickung oder Kraftstoffadditiv ausgebildet sind, wobei wenigstens zwei Umfassungswände der Kammern aneinander angrenzen, die Kammern Bestandteil eines zusammenhängenden Behälterkörperverbundes sind, die Umfassungswände wenigstens zweier aneinander angrenzender Kammern stoffschlüssig über wenigstens eine Materialbrücke oder formschlüssig über Befestigungsmittel miteinander verbunden sind und wobei die Verbindung unter Einwirkung aufprallbedingter Verformungskräfte selbsttätig lösend ausgebildet ist, so dass der Behälterkörperverbund bei Einwirkung aufprallbedingter Verformungskräfte in wenigstens zwei separate Behälterkörperteile oder zwei Behälterkörper geteilt wird.
Die Kammern des Mehrkammerbehälters im Sinne der vorliegenden Erfindung stehen nicht miteinander in Fluidverbindung in dem Sinne, dass jede der Kammern ein in sich abgeschlossenes Volumen bildet, so dass im Falle einer Trennung des Behälterkörperverbundes in zwei oder mehr separate Behälterkörperteile gegebenenfalls jeder der Behälterkörperteile intakt bleibt und keine Flüssigkeit austritt.

Unter einem Behälterkörperverbund im Sinne der vorliegenden Erfindung ist eine zusammenhängende Anordnung von Kammern zu verstehen, die zumindest in der bestimmungsgemäßen Einbaulage einen Strukturverbund bildet.

Eine stoffschlüssige Verbindung im Sinne der Erfindung umfasst eine Schweißverbindung, eine Klebeverbindung sowie eine im engsten Sinne einteilige, das heißt monolithische Verbindung.

Unter einer formschlüssigen Verbindung im Sinne der Erfindung kann eine Rastverbindung, Schnappverbindung, Renkverbindung oder eine Steckverbindung mittels zusätzlicher Steckverbindungselemente wie beispielsweise Bolzen, Zapfen oder dergleichen zu verstehen sein.

Ein Mehrkammerbehälter gemäß der vorliegenden Erfindung kann beispielsweise ein Kraftstoffvolumen und ein Reinigungsflüssigkeitsvolumen und/oder ein Volumen für ein Additiv zur Abgasentstickung (Reduktionsmittel) umfassen. Dabei kann vorgesehen sein, dass beispielsweise eine oder mehrere Kammern für Hilfsflüssigkeiten wie beispielsweise Schmiermittel, Kühlmittel, Reinigungsflüssigkeit oder Reduktionsmittel flankierend um eine Kammer angeordnet sind, die zur Aufnahme von Kraftstoff vorgesehen ist, so dass diejenige Kammer, die als Volumen zur Aufnahme von Kraftstoff ausgebildet ist von einer oder mehreren Kammern, die zur Aufnahme von Hilfsflüssigkeiten vorgesehen sind, gegen aufprallbedingte Kräfte geschützt wird. Diejenigen Kammern, die zur Aufnahme einer Hilfsflüssigkeit vorgesehen sind, können beispielsweise in der Einbaulage im Kfz so angeordnet sein, dass sie in Richtung auf den erwarteten Aufprall vor derjenigen Kammer angeordnet sind, die als Volumen zur Aufnahme von Kraftstoff ausgebildet ist.

Im Falle eines Aufpralls wird sich der Behälterkörperverbund unter Einwirkung der Verformungskräfte lösen, hierdurch werden in vorteilhafter Art und Weise die auf den Mehrkammerbehälter einwirkenden Verformungskräfte aufgezehrt, so dass die Umfassungswände der Kammer entsprechend entlastet werden und die Dichtigkeit der einzelnen Kammern gewährleistet bleibt. Ein Versagen der Behälterkörperanordnung in dem Sinne, dass die einzelnen Behälterkörperteile sich voneinander lösen, ist insoweit unkritischer als ein Versagen der einzelnen Behälterkörperteile.

Ein Mehrkammerbehälter der vorstehend genannten Art kann insbesondere auch aus Behälterkörperteilen unterschiedlicher Materialien zusammengesetzt sein. Beispielsweise bestehen für Kraftstoffbehälter andere Sicherheitsanforderungen im Kraftfahrzeug als für Additivbehälter oder Wischwasserbehälter, die aus entweder spröderen oder dünnwandigeren Behälterkörpern bestehen können. In diesem Fall kann der sprödere oder dünnwandigere Behälterkörper in Richtung eines zu erwartenden Aufpralls dem dickwandigeren oder elastischeren Behälterkörper so vorgelagert sein, dass der sprödere Behälterkörper oder dünnwandigere Behälterkörper im Falle eines Aufpralls geopfert wird, in dem Sinne, dass dessen Zerstörung eine Verzehrung der aufprallbedingten Kräfte bewirkt. Er kann eine Schutzfunktion für den weniger fragileren Behälterkörper im Sinne eines Schutzkissens oder Schutzpolsters übernehmen. Der weniger fragile Behälterkörper kann bei einer solchen Konfiguration zur Aufnahme von Kraftstoff oder Schmiermittel ausgebildet sein, wohingegen der fragilere Behälterkörper zur Aufnahme einer Betriebsflüssigkeit ausgebildet ist, die im Hinblick auf ihre Umweltgefährdung weniger kritisch ist.

Schließlich ist für Kraftstoffbehälter eine hohe Permeationsdichtigkeit gefordert, so dass beispielsweise ein Behälterkörperteil des Mehrkammerbehälters aus einem koextrudierten mehrschichtigen thermoplastischen Kunststoff mit Barriereschichten für Kohlenwasserstoffe ausgebildet sein kann, wohingegen ein anderer Behälterkörperteil aus einem extrusionsblasgeformten einlagigen thermoplastischem Kunststoff bestehen kann.

Bei einer bevorzugten Variante des Mehrkammerbehälters gemäß der Erfindung ist vorgesehen, dass der Behälterkörperverbund wenigstens zwei einstückig miteinander verbundene Behälterkörperteile umfasst, die entlang einer Sollbruchlinie miteinander verbunden sind.

Die Behälterkörper können beispielsweise über wenigstens eine Materialbrücke miteinander verbunden sein, die mit wenigstens einer Perforationslinie versehen ist.

Alternativ kann als Sollbruchlinie eine Dünnstelle oder Falz in einer Materialbrücke zwischen miteinander verbundenen Behälterkörperteilen vorgesehen sein.

Schließlich kann vorgesehen sein, dass die Behälterkörperteile über wenigstens eine Materialbrücke miteinander verbunden sind, die als Filmscharnier ausgebildet ist.

Nach einer anderen Variante des Mehrkammerbehälters gemäß der Erfindung können die Behälterkörper über wenigstens eine Materialbrücke miteinander verbunden sein, die aus einem sprödharten Material besteht, welches vorzugsweise ein größeres Elastizitätsmodul aufweist als das Material wenigstens eines der einzelnen Behälterkörperteile. Bei einigen oder allen der vorstehend beschriebenen Varianten des Mehrkammerbehälters gemäß der Erfindung können die Behälterkörperteile einstückig miteinander verbunden sein in dem Sinne, dass diese aus einem monolithischen Materialverbund bestehen.

Der Mehrkammerbehälter gemäß der Erfindung kann beispielsweise durch Spritzgießen, Tiefziehen, Rotationssintern, Extrusionsblasformen oder andere Herstellungsverfahren erhalten worden sein.

Alternativ zu einer solchen einstückigen Ausbildung des Mehrkammerbehälters gemäß der Erfindung kann vorgesehen sein, dass der Behälterkörperverbund aus zwei oder mehr Behälterkörpern mehrteilig zusammengesetzt ist.

Dabei ist es vorteilhaft, wenn die Behälterkörper formschlüssig zwangsentformbar miteinander verrastet sind. Formschlüssig zwangsentformbar im Sinne der Erfindung bedeutet, dass die den Behälterkörperverbund bildenden Behälterkörper zwar formschlüssig ineinander greifen, die Abmessungen der ineinander greifenden Konturen allerdings so gewählt sind, dass diese vermöge der Elastizität der ineinander greifenden Teile der Behälterkörper unter gegenseitiger plastischer Verformung des Materials voneinander lösbar sind. So kann zum Beispiel bei einem Schwalbenschwanzprofil das Maß des Hinterschnitts der Nut und die komplementäre Kontur der betreffenden Rippe so gewählt sein, dass bei Aufbringen einer Entformungskraft, die ein bestimmtes Ausmaß überschreitet, eine elastische Verformung beider ineinander greifender Konturen stattfindet, die ein Lösen der Verrastung ermöglicht.

Grundsätzlich kann vorgesehen sein, dass wenigstens ein Behälterkörper wenigstens ein hinterschnittenes Nutprofil aufweist, welches mit einem komplementären Rippenprofil des benachbarten Behälterkörpers formschlüssig zusammenwirkt. Die zusammenwirkenden Profile, in diesem Falle das Nutprofil und das Rippenprofil, können jeweils linienförmig angeordnet sein, die Geometrie der Erstreckung der jeweiligen Profile auf dem Behälterkörper ist allerdings nicht kritisch für die Erfindung.

Beispielsweise kann auch vorgesehen sein, dass wenigstens ein Behälterkörper wenigstens einen, vorzugsweise mehrere Rastzapfen aufweist, wobei der Rastzapfen nach Art einer Druckknopfverbindung mit einer als Sackloch ausgebildeten Zapfenaufnahme zusammenwirkt. Der Rastzapfen und die Zapfenaufnahme können ein mit dem Nutprofil und dem dazu komplementären Rippenprofil vergleichbares Querschnittsprofil aufweisen. Der Rastzapfen kann beispielsweise als Tannenbaumprofil mit einem oder mehrere umlaufenden Rippen ausgebildet sein, das Sackloch kann eine entsprechende Innenkontur aufweisen.

Bei einer ebenfalls vorteilhaften Variante des Mehrkammerbehälters gemäß der Erfindung ist vorgesehen, dass das Nutprofil als Schwalbenschwanzprofil oder Kreuzprofil oder C-Profil mit hakenförmig ausgebildeten Profilschenkeln ausgebildet ist.

Bei einer alternativen Ausgestaltung des Mehrkammerbehälters gemäß der Erfindung kann vorgesehen sein, dass die Behälterkörper über wenigstens einen Zapfen oder wenigstens einen Passstift miteinander verbunden sind, wobei der Zapfen oder der Passstift wenigstens ein Loch wenigstens eines Behälterkörpers durchsetzt und wobei der Zapfen oder Passstift eine Sollbruchstelle aufweist. Selbstverständlich können die Behälterkörper über eine Vielzahl von Zapfen oder Passstiften entlang einer oder mehrerer Seiten miteinander verbunden sein.

Alternativ können die Behälterkörper beispielsweise über einen Reißverschluss miteinander verbunden sein.

Bei einer vorteilhaften Variante des Mehrkammerbehälters gemäß der Erfindung ist vorgesehen, dass wenigstens einer der Behälterkörper einen Befestigungsflansch aufweist, der mit einer Vielzahl von Löchern versehen ist und dass wenigstens ein weiterer der Behälterkörper eine Vielzahl einstückig angeformter Zapfen aufweist, die in die Löcher des Befestigungsflanschs eingreifen.

Bei einer anderen Variante des Mehrkammerbehälters gemäß der Erfindung kann vorgesehen sein, dass jeder Behälterkörper einen Befestigungsflansch aufweist, jeder Befestigungsflansch mit einer Vielzahl von Löchern versehen ist und die Befestigungsflansche bei der Behälterkörperanordnung in der Einbaulage so übereinander angeordnet sind, dass die Löcher der Flansche fluchtend zueinander ausgerichtet sind und Passstifte oder Zapfen aufnehmen, die als separate Bauteile in diese eingesetzt worden sind und die entweder aus einem Material bestehen, dass eine geringe Scherfestigkeit aufweist oder die mit entsprechenden Sollbruchstellen versehen sind.

Die Erfindung wird nachstehend anhand eines in den Zeichnungen dargestellten Ausführungsbeispiels erläutert.

Es zeigen:
- Figuren 1a bis 1g:: einen Mehrkammerbehälter gemäß der Erfindung, der aus einem zusammenhängenden Behälterkörperverbund ausgebildet ist, wobei aneinander grenzende Kammern über wenigstens eine Materialbrücke miteinander verbunden sind,
- Figur 2:: eine Variante des Mehrkammerbehälters gemäß der Erfindung, bei welchem ein Behälterkörperverbund durch zwei stoffschlüssig aneinander Behälterkörper gebildet wird,
- Figuren 3 bis 6:: verschiedene Varianten eines Mehrkammerbehälters gemäß der Erfindung, der aus zwei Behälterkörpern zusammengesetzt ist, die einen formschlüssig zusammengefügten Behälterkörperverbund bilden,
- Figur 7:: eine Variante des Mehrkammerbehälters gemäß der Erfindung, bei welcher zwei Behälterkörper formschlüssig über Scherbolzen oder Scherzapfen miteinander verbunden sind und
- Figuren 8a bis 8c:: Varianten eines Mehrkammerbehälters gemäß der Erfindung, der aus zwei einstückig miteinander verbundenen Behälterkörperteilen besteht, die über eine Materialbrücke mit Sollbruchlinie miteinander verbunden sind.

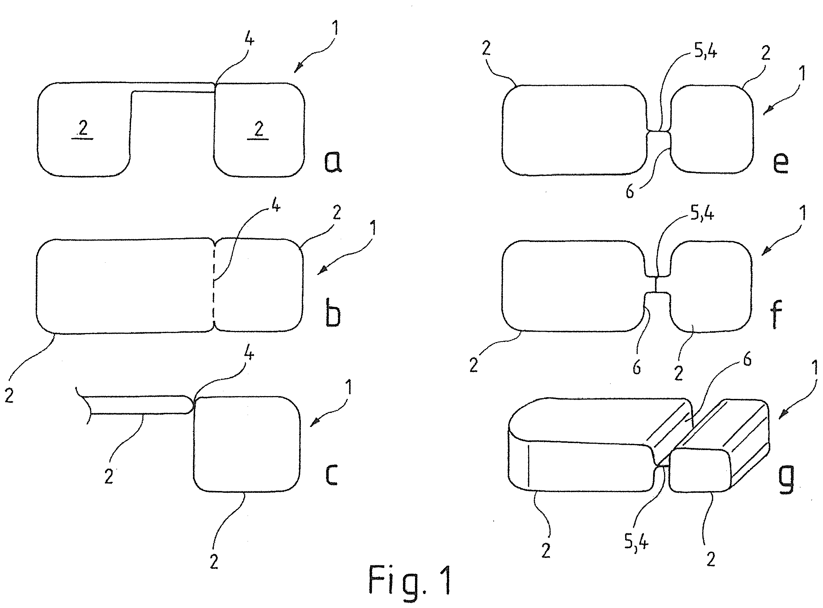

Der Mehrkammerbehälter 1 gemäß der Erfindung umfasst zwei oder mehr Behälterkörperteile 2 (siehe beispielsweise Figuren 1a bis g) oder zwei oder mehrere separate Behälterkörper 3, die jeweils einen Behälterkörperverbund bilden.

Jeder Behälterkörper 3 oder jedes Behälterkörperteil 2 definiert wenigstens eine Kammer, die ein im Wesentlichen in sich abgeschlossenes Volumen definiert.

Wenn im Folgenden von Behälterkörperteilen 2 die Rede ist, so werden damit Behälterkörperteile bezeichnet; die einem im Wesentlichen einteiligen Behälterkörperverbund bilden. Davon unterschieden wird nach der Systematik der vorliegenden Patentanmeldung zwischen mehreren vollständig getrennten Behälterkörpern, die formschlüssig zu einem Behälterkörperverbund zusammengesetzt sind.

Allen Ausführungsbeispielen des Mehrkammerbehälters gemäß der Erfindung ist gemeinsam, dass die Behälterkörperteile oder die Behälterkörper bei Einwirkung aufprallbedingter Verformungskräfte in zwei separate Behälterkörperteile 2 oder Behälterkörper 3 geteilt beziehungsweise aufgelöst werden.

In Figur 1a ist beispielsweise eine stark vereinfachte Ansicht eines Mehrkammerbehälters 1 gemäß der Erfindung dargestellt, der einteilig aus zwei Behälterkörperteilen 2 besteht. Die geometrische Anordnung der Behälterkörperteile 2 zueinander ist nach Art eines Satteltanks gewählt, im Rahmen der Erfindung sind allerdings auch andere Konfigurationen von zueinander angeordneten Behälterkörperteilen 2 denkbar. Beispielsweise können einzelne Behälterkörperteile 2 torusförmig oder kreissegmentförmig ausgebildet sein und einander konzentrisch umgeben.

In den Fällen der Figuren 1a bis 1c sind die einzelnen Behälterkörperteile 2 über eine Sollbruchlinie 4 miteinander verbunden, wobei die Figuren 1a bis 1 c verschiedene Ansichten eines Konzepts eines Mehrkammerbehälters 1 zeigen. Beide Behälterkörperteile 2 sind einteilig im Sinne von einstückig entlang der Sollbruchlinie 4 miteinander verbunden. Beide Behälterkörperteile 2 können in einem Arbeitsgang beispielsweise mittels Extrusionsblasformen in einem gemeinsamen Werkzeug erhalten worden sein, wobei die Behälterkörperteile 2 zumindest nicht unmittelbar miteinander in Fluidverbindung stehen, das heißt, dass beide Behälterkörperteile 2 als in sich abgeschlossene Volumina ausgebildet sind, die jeweils andere Medien aufnehmen können. Beispielsweise kann der größere Behälterkörperteil als Kraftstoffbehälter ausgebildet sein, wohingegen der kleinere Behälterkörperteil 2 als Additivbehälter beispielsweise für ein Kühlmittel, eine Reinigungsflüssigkeit, ein Reduktionsmittel für die Abgasentstickung oder dergleichen ausgebildet sein kann. In sich abgeschlossen schließt gemäß der Erfindung nicht aus, dass Mittel zur Re- und Entlüftung der Volumina sowie Mittel zur Entnahme von Flüssigkeit und/oder Mittel zur Befüllung der Volumina vorgesehen sind.

Etwa erforderliche Einbauteile, Anschlüsse oder dergleichen Funktionselemente der einzelnen Behälterkörperteile 2 sind aus Gründen der Vereinfachung nicht dargestellt.

Die Verbindungslinie zwischen den Behälterkörperteilen 2, die als Sollbruchlinie 4 ausgebildet ist, kann beispielsweise durch eine entsprechende Abquetschung des Vorformlings beim Extrusionsblasformen im Blasformwerkzeug erhalten worden sein. Die Sollbruchlinie 4 ist dabei von der Materialstärke so gewählt, dass sich die Behälterkörperteile 2 bei Einwirken von äußeren Kräften, beispielsweise bei Einwirkung von Biegekräften oder Stößen voneinander lösen können, wobei jeder der Behälterkörperteile 2 möglichst unversehrt bleiben sollte.

Die Sollbruchlinie 4 kann beispielsweise als Perforationslinie mit einer Vielzahl von Perforierungen ausgebildet sein, denkbar ist allerdings auch eine Ausbildung nach Art eines Filmscharniers, also nur als Schwächungslinie.

Im Falle des Ausführungsbeispiels gemäß Figuren 1a bis 1c ist die Verbindung der Behälterkörperteile 2 geometrisch so beschaffen, dass beispielsweise bei einem Seitenaufprall über wenigstens einen der Behälterkörperteile 2 ein hohes Biegemoment in die Sollbruchlinie 4 eingeleitet wird und zum Aufbrechen der Verbindung führt.

Wie bereits erwähnt, kann beispielsweise der Mehrkammerbehälter 1 als Satteltank ausgebildet sein, wobei jeder der Behälterkörperteile 2 ein Volumen definiert, das zumindest überwiegend jeweils neben einer Abgasanlage und/oder einem Kardantunnel eines Kfz angeordnet ist.

Eine andere Variante des Mehrkammerbehälters 1 ist beispielsweise in den Figuren 1e bis g dargestellt, wo die einzelnen Behälterkörperteile 2 über eine Materialbrücke 5 beziehungsweise einen Materialsteg miteinander verbunden sind, der eine Sollbruchlinie 4 bildet. Die Materialbrücke 5 erstreckt sich ebenso wie die Sollbruchlinie 4 gemäß Figuren 1a bis 1c über die gesamte Länge zwei einander grenzender Seitenwände 6 der Behälterkörperteile 2, wobei sich die Materialbrücke 5 bezogen auf die Höhe der Behälterkörperteile 2 etwa mittig erstreckt.

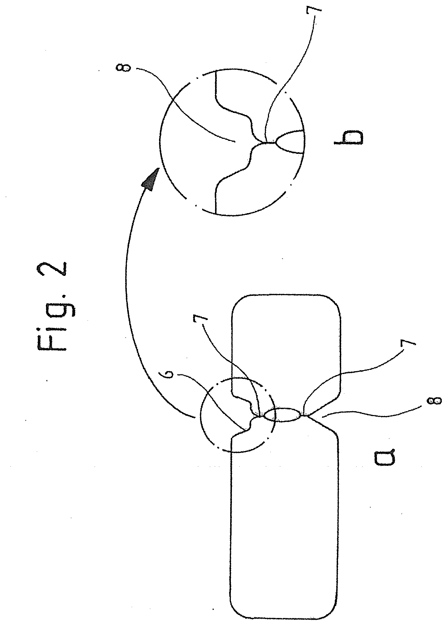

Eine andere Variante des Mehrkammerbehälters 1 gemäß der Erfindung ist in Figur 2 dargestellt. Der Mehrkammerbehälter 1 gemäß Figur 2 umfasst zwei Behälterkörperteile 2, die nachträglich stoffschlüssig miteinander verbunden wurden, beispielsweise durch Kleben oder Schweißen und zwar entlang zweier übereinander angeordneter Fügenähte 7, die ebenfalls Sollbruchlinien 4 bilden.

Das Kleben kann beispielsweise mittels eines Klebstoffs/Haftvermittlers vorgenommen worden sein, der aufgrund seines Elastizitätsmoduls und seiner Materialbeschaffenheit eine Schwächungslinie bildet.

Alternativ können die Fügenähte 7 durch eine Verschweißung der Behälterkörperteile 2 entlang der Fügenähte 7 erzeugt worden sein.

Gemäß einer bevorzugten Variante des Mehrkörperbehälters 1 nach der Erfindung sind die Behälterkörperteile 2 oder die Behälterkörper 3 aus thermoplastischem Kunststoff ausgebildet, wobei eine solche Materialwahl für alle in der Anmeldung genannten Ausführungsbeispiele vorgesehen sein kann.

In dem Fall kann das Verschweißen der Behälterkörperteile 2 ohne Zuhilfenahme weiteren Materials erfolgen, beispielsweise durch gegenseitige molekulare Durchdringung der an den betreffenden Stellen erweichten Behälterkörperteile, die dann im erweichten/plastischem Zustand unter Anwendung von Fügedruck aufeinander gebracht werden.

Bei dem in Figur 2 dargestellten Ausführungsbeispiel sind die Seitenwände 6 der Behälterkörperteile 2 geometrisch vorzugsweise so ausgebildet, dass sie eine Einleitung von Biegekräften in die Fügenähte 7 zulassen, das heißt dass entsprechende Biegewege sichergestellt sind. So sind beispielsweise bei dem Mehrkammerbehälter 1 gemäß Figur 2 oberhalb und unterhalb der Fügenähte 7 entsprechende Zwickel 8 zwischen den Seitenwänden 6 der Behälterkörperteile 2 vorgesehen.

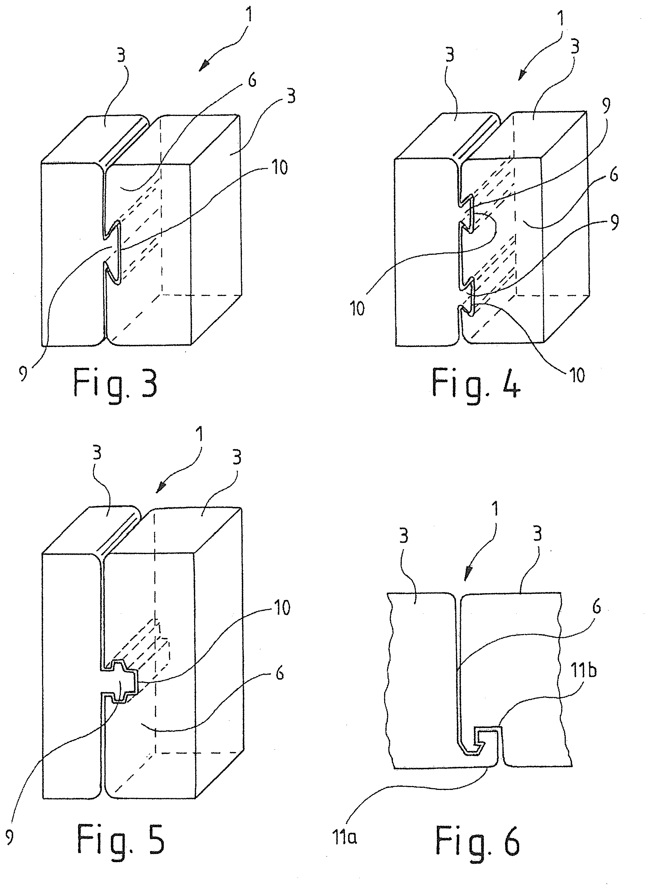

Die Figuren 3 bis 6 zeigen weitere Varianten des Mehrkammerbehälters 1 gemäß der Erfindung, wobei jeweils zwei stofflich getrennte und gegebenenfalls stofflich verschiedene Behälterkörper 3 miteinander zu einem Behälterkörperverbund formschlüssig zusammengefügt sind.

In allen Ausführungsbeispielen sind jeweils exemplarisch nur zwei Behälterkörper 3 oder Behälterkörperteile 2 miteinander zu einem Behälterkörperverbund zusammengefügt, die Erfindung ist allerdings so zu verstehen, dass der Mehrkammerbehälter 1 gemäß der Erfindung auch eine durchaus komplexe Behälterkörperanordnung von gegebenenfalls zwei Behälterkörpern 3 oder Behälterkörperteilen 2 umfassen kann.

Die Figur 3 zeigt beispielsweise zwei Behälterkörper 3, die, wie bei allen anderen Ausführungsbeispielen auch fluidmäßig vollständig voneinander getrennte Volumina definieren. Ein erster Behälterkörper 3 umfasst auf seiner Seitenwand 6 eine sich über die Länge der Seitenwand 6 erstreckende Rippe 9 mit einem Schwalbenschwanzprofil, der an den ersten Behälterkörper 3 angrenzende zweite Behälterkörper 3 umfasst eine hierzu komplementär ausgebildete Nut 10 mit entsprechenden Hinterschneidungen. Die Nut 10 kann in die Rippe 9 eingeschoben oder eingeschnappt sein, die Flanken der Nut 10 und der Rippe 9 sind jedenfalls so bemessen, dass bei Einwirkung von Biegekräften oder anderen Verformungskräften auf den Behälterkörperverbund eine Zwangsentformung der Rippe 9 aus der Nut stattfinden kann. Eine solche Zwangsentformung ist insbesondere dann möglich, wenn wenigstens ein Behälterkörper 3 aus einem thermoplastischem Kunststoff besteht, der eine hinreichende Elastizität aufweist, die eine solche Zwangsentformbarkeit gewährleistet.

Grundsätzlich können Mehrkammerbehälter 1 nach den Varianten 3 bis 6 so ausgebildet sein, dass die Behälterkörper 3 jeweils aus unterschiedlichen Materialien bestehen, was etwa unterschiedlichen Inhalten der durch die Behälterkörper 3 definierten Volumina Rechnung trägt.

Bei einer alternativen Variante des aus mehreren Behälterkörpern 3 bestehenden Behälterkörperverbundes kann beispielsweise auch vorgesehen sein, dass die an einer Seitenwand 6 vorgesehene Rippe 9 ihrerseits über eine oder mehrere Sollbruchlinien mit der betreffenden Seitenwand 6 verbunden ist, so dass bei Einwirken von Kräften beispielsweise die Rippe 9 abreißen könnte und in der Nut 10 verbleiben könnte. Der Fachmann wird erkennen, dass er hierzu die Rippe 9 so ausbilden muss, dass ein Abreißen der Rippe 9 von der betreffenden Seitenwand 6 nicht zu einer Beschädigung der Seitenwand 6 führt. Die Rippe 9 kann beispielsweise auf die Seitenwand 6 des Behälterkörpers 3 aufgeklebt oder aufgeschweißt worden sein. Eine solche Variante ist für alle der in den Figuren 3 bis 6 dargestellten Ausführungsvarianten sinnvoll und zweckmäßig.

Bei der in Figur 4 dargestellten Variante des Mehrkammerbehälters 1 sind entlang eines Behälterkörpers 3 mehrere Rippen auf einer Seitenwand 6 angeordnet, die jeweils mit einer Nut 10 in der Seitenwand 6 des anderen Behälterkörpers 3 zusammenwirken.

Wie eingangs bereits einmal erwähnt wurde, ist die flächige /linienförmige Anordnung/Erstreckung der ineinander eingreifenden Profile auf den Seitenwänden 6 der Behälterkörper 3 nicht kritisch. Anstelle dessen können auch einzelne Zapfen und hierzu komplementäre Sacklöcher oder Aufnahmen an den Seitenwänden 6 der Behälterwände vorgesehen sein.

Die Figur 5 zeigt eine Variante des Mehrkammerbehälters 1, bei welchem die Rippe 9 im Querschnitt ein Kreuzprofil aufweist, die hierzu komplementär ausgebildete Nut 10 weist ein ebensolches Kreuzprofil auf.

Bei der Variante des Mehrkammerbehälters 1 gemäß der Erfindung greifen die Seitenwände 6 der Behälterkörper 3 nach Art eines Scharniers ineinander ein. Ein erster Behälterkörper 3 umfasst ein etwa C-förmig ausgestaltetes Rippenprofil 11a, welches in ein entsprechend ausgebildetes Nutprofil 11b eingreift.

Das Rippenprofil 11a und das Nutprofil 11b sind jeweils an einer Seitenwand 6 des betreffenden Behälterkörpers so angeordnet, dass diese sich im Bereich einer Ecke zu einem Oberboden oder zu einem Unterboden des betreffenden Behälterkörpers 3 erstrecken. Auf diese Art und Weise ist gewährleistet, dass bei Einleitung entsprechender Biege-/Verformungskräfte in das durch das Rippenprofil 11a und das Nutprofil 11b gebildete Scharnier eingeleitet werden, dieses Scharnier bildet eine Solltrennlinie zwischen den Behälterkörpern 3.

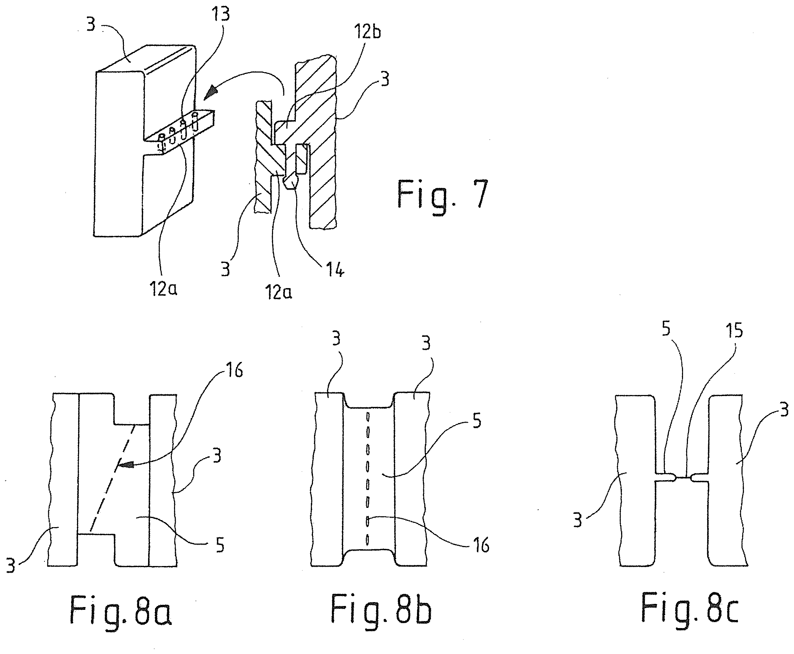

Eine weitere Variante des Mehrkammerbehälters 1 gemäß der Erfindung ist in Figur 7 dargestellt. Der Mehrkammerbehälter 1 gemäß dem Ausführungsbeispiel nach Figur 7 umfasst zwei Behälterkörper, von welchen ein Behälterkörper eine Leiste 12a, 12b oder einen Befestigungsflansch umfasst, wobei die Leiste 12a, 12b oder aber auch der Befestigungsflansch mit einer Vielzahl von Löchern 13 versehen ist, die von Zapfen 14 des benachbarten Behälterkörpers 3 durchsetzt werden.

Der mit Zapfen 14 versehene Behälterkörper 3 umfasst ebenfalls eine Leiste 12a, 12b an die die Zapfen 14 einstückig angeformt sind. Bei dem dargestellten Ausführungsbeispiel werden die Zapfen 14 von oben in die Löcher 13 der Leiste 12a eingesetzt, diese erstrecken in der dargestellten Lage der Behälterkörper 3 an der Leiste 12b nach unten, selbstverständlich kann die Konfiguration auch so sein, dass die Zapfen 14 an der Leiste 12b sich nach oben erstrecken und der Behälterkörper mit der Leiste 12a von oben auf die Zapfen 14 aufgesetzt wird.

Anstelle einstückig an den Behälterkörper 3 angeformter Zapfen 14 kann auch vorgesehen sein, dass jeder der Behälterkörper eine Leiste 12a, 12b mit Löchern 13 umfasst, die Behälterkörper 3 so angeordnet werden, dass die in den Leisten 12a, 12b vorgesehenen Löchern zueinander fluchtend ausgerichtet sind und dass Zapfen als separate Bauelemente die Löcher 13 durchsetzend vorgesehen sind.

Die Zapfen 14 weisen jeweils eine Sollbruchstelle auf, so dass diese nach Art von Scherbolzen abscheren können.

In den Figuren 8a bis 8c sind nochmals Varianten von zu einem Mehrkammerbehälter 1 verbundenen Behälterkörperteilen 2 dargestellt, zwischen denen sich jeweils eine Materialbrücke 5 erstreckt, die mit einer Sollbruchlinie 4 versehen ist.

Bei der Variante gemäß Figur 8a umfasst die Sollbruchlinie 4 eine etwa diagonal verlaufene Perforationslinie 16. Bei der Variante gemäß Figur 8b ist die Perforationslinie etwa parallel zur Erstreckung der Seitenwände 6 ausgerichtet.

Bei der Variante des Mehrkammerbehälters 1 gemäß Figur 8c ist in einer Materialbrücke 5 zwischen den Behälterkörperteilen 2 ein Filmscharnier 15 in Form eines Streifens dünnerer Wandstärke vorgesehen.

### Bezugszeichenliste:

- 1: Mehrkammerbehälter
- 2: Behälterkörperteile
- 3: Behälterkörper
- 4: Sollbruchlinie
- 5: Materialbrücke
- 6: Seitenwände
- 7: Fügenähte
- 8: Zwickel
- 9: Rippe
- 10: Nut
- 11a: Rippenprofil
- 11b: Nutprofil
- 12a, 12b: Leiste
- 13: Löcher
- 14: Zapfen
- 15: Filmscharnier
- 16: Perforationslinie

## Patentansprüche

1. Mehrkammerbehälter aus Kunststoff als Betriebsflüssigkeitsbehälter für ein Kfz, der wenigstens zwei Kammern umfasst, die als getrennte Volumina nicht miteinander in Fluidverbindung stehen und die jeweils zur Aufnahme einer Betriebsflüssigkeit ausgewählt aus einer Gruppe umfassend Kraftstoff, Schmiermittel, Kühlmittel, Reinigungsflüssigkeit, Reduktionsmittel für die Abgasentstickung oder Kraftstoffadditiv ausgebildet sind, wobei wenigstens zwei Umfassungswände der Kammern aneinander angrenzen, die Kammern Bestandteil eines zusammenhängenden Behälterkörperverbundes sind, und wobei die Umfassungswände wenigstens zweier aneinander angrenzender Kammern stoffschlüssig über wenigstens eine Materialbrücke miteinander verbunden sind, wobei der Mehrkammerbehälter **dadurch gekennzeichnet ist, dass** die Verbindung unter Einwirkung aufprallbedingter Verformungskräfte entlang einer Sollbruchlinie (4) selbsttätig lösend ausgebildet ist, so dass der Behälterkörperverbund bei Einwirkung aufprallbedingter Verformungskräfte in wenigstens zwei separate Behälterkörperteile (2) oder Behälterkörper (3) entlang der Sollbruchlinie (4) geteilt wird.

2. Mehrkammerbehälter aus Kunststoff als Betriebsflüssigkeitsbehälter für ein Kfz, der wenigstens zwei Kammern umfasst, die als getrennte Volumina nicht miteinander in Fluidverbindung stehen und die jeweils zur Aufnahme einer Betriebsflüssigkeit ausgewählt aus einer Gruppe umfassend Kraftstoff, Schmiermittel, Kühlmittel, Reinigungsflüssigkeit, Reduktionsmittel für die Abgasentstickung oder Kraftstoffadditiv ausgebildet sind, wobei wenigstens zwei Umfassungswände der Kammern aneinander angrenzen, die Kammern Bestandteil eines zusammenhängenden Behälterkörperverbundes sind, und wobei die Umfassungswände wenigstens zweier aneinander angrenzender Kammern formschlüssig oder über Befestigungsmittel miteinander verbunden sind, wobei der Mehrkammerbehälter **dadurch gekennzeichnet ist, dass** die Verbindung unter Einwirkung aufprallbedingter Verformungskräfte entlang einer Sollbruchlinie (4) selbsttätig lösend ausgebildet ist, so dass der Behälterkörperverbund bei Einwirkung aufprallbedingter Verformungskräfte in wenigstens zwei separate Behälterkörperteile (2) oder Behälterkörper (3) entlang der Sollbruchlinie (4) geteilt wird.

3. Mehrkammerbehälter nach Anspruch 1 oder 2, **dadurch gekennzeichnet, dass** die Behälterkörperteile (2) über wenigstens eine Materialbrücke (5) miteinander verbunden sind, die mit wenigstens einer Perforationslinie (16) versehen ist.

4. Mehrkammerbehälter nach Anspruch 1 oder 2, **dadurch gekennzeichnet, dass** die Behälterkörperteile (2) über wenigstens eine Materialbrücke (5) miteinander verbunden sind, die als Filmscharnier (15) ausgebildet ist.

5. Mehrkammerbehälter nach Anspruch 1 oder 2, **dadurch gekennzeichnet, dass** die Behälterkörperteile (2) über wenigstens eine Materialbrücke (5) miteinander verbunden sind, die aus einem sprödbrüchigen Material besteht, welches vorzugsweise ein größeres Elastizitätsmodul aufweist als das Material der Behälterkörperteile (2).

6. Mehrkammerbehälter nach Anspruch 1 oder 2, **dadurch gekennzeichnet, dass** der Behälterkörperverbund aus zwei oder mehr Behälterkörpern (3) mehrteilig zusammengesetzt ist.

7. Mehrkammerbehälter nach einer Kombination der Ansprüche 2 und 6, **dadurch gekennzeichnet, dass** die Behälterkörper (3) formschlüssig zwangsentformbar miteinander verrastet sind.

8. Mehrkammerbehälter nach Anspruch 6, **dadurch gekennzeichnet, dass** wenigstens ein Behälterkörper (3) wenigstens ein hinterschnittenes Nutprofil aufweist, welches mit einem komplementären Rippenprofil des benachbarten Behälterkörpers (3) formschlüssig zusammenwirkt.

9. Mehrkammerbehälter nach einem der Ansprüche 6 bis 8, **dadurch gekennzeichnet, dass** wenigstens ein Behälterkörper (3) wenigstens einen, vorzugsweise mehrere Rastzapfen aufweist, wobei ein Rastzapfen nach Art einer Druckknopfverbindung mit einer als Sackloch ausgebildeten Zapfenaufnahme zusammenwirkt.

10. Mehrkammerbehälter nach Anspruch 8, **dadurch gekennzeichnet, dass** das Nutprofil als Schwalbenschwanzprofil oder Kreuzprofil oder C-Profil mit hakenförmig ausgebildeten Profilschenkeln ausgebildet ist.

11. Mehrkammerbehälter nach Anspruch 6, **dadurch gekennzeichnet, dass** die Behälterkörper (3) über wenigstens einen Zapfen (14) oder wenigstens einen Passstift miteinander verbunden sind, wobei der Zapfen (14) oder der Passstift ein Loch (13) wenigstens eines Behälterkörpers (3) durchsetzt und wobei der Zapfen (14) oder der Passstift eine Sollbruchstelle aufweist.

12. Mehrkammerbehälter nach Anspruch 11, **dadurch gekennzeichnet, dass** wenigstens einer der Behälterkörper (3) einen Befestigungsflansch aufweist, der mit einer Vielzahl von Löchern (13) versehen ist und dass wenigstens ein weiterer der Behälterkörper (3) eine Vielzahl einstückig angeformter Zapfen (14) aufweist, die in die Löcher (13) des Befestigungsflanschs eingreifen.

13. Mehrkammerbehälter nach einem der vorhergehenden Ansprüche, **dadurch gekennzeichnet, dass** der Mehrkammerbehälter aus thermoplastischem Kunststoff gebildet ist.

## Claims

1. Multi-chamber container of plastics material, acting as an operating fluid container for a motor vehicle, which comprises at least two chambers which as separate volumes are not in fluid connection with each other and which are each constructed to receive an operating fluid selected from a group comprising fuel, lubricant, coolant, cleaning fluid, reducing agent for the exhaust gas denitrification or fuel additive, wherein at least two surrounding walls of the chambers adjoin each other, the chambers are a component of a coherent container body assembly, wherein the multi-chamber container, wherein the surrounding walls of at least two mutually adjacent chambers are connected to each other in a materially integral manner by means of at least one material bridge and **characterized in that** the connection is constructed to be self-releasing along a desired breaking line (4) under the action of deformation forces resulting from an impact so that the container body assembly under the action of deformation forces resulting from an impact is divided along the desired breaking line (4) into at least two separate container body portions (2) or container bodies (3).

2. Multi-chamber container of plastics material, acting as an operating fluid container for a motor vehicle, which comprises at least two chambers which as separate volumes are not in fluid connection with each other and which are each constructed to receive an operating fluid selected from a group comprising fuel, lubricant, coolant, cleaning fluid, reducing agent for the exhaust gas denitrification or fuel additive, wherein at least two surrounding walls of the chambers adjoin each other, the chambers are a component of a coherent container body assembly, wherein the multi-chamber container wherein the surrounding walls of at least two mutually adjacent chambers are connected to each other in a materially integral manner or by securing means and **characterized in that** the connection is constructed to be self-releasing along a desired breaking line (4) under the action of deformation forces resulting from an impact so that the container body assembly under the action of deformation forces resulting from an impact is divided along the desired breaking line (4) into at least two separate container body portions (2) or container bodies (3).

3. Multi-chamber container according to Claim 1 or 2, **characterized in that** the container body portions (2) are connected to each other by means of at least one material bridge (5) which is provided with at least one perforation line (16).

4. Multi-chamber container according to Claim 1 or 2, **characterized in that** the container body portions (2) are connected to each other by means of at least one material bridge (5) which is constructed as a film-like hinge (15).

5. Multi-chamber container according to Claim 1 or 2, **characterized in that** the container body portions (2) are connected to each other by means of at least one material bridge (5) which comprises a brittle material which preferably has a greater elasticity modulus than the material of the container body portions (2).

6. Multi-chamber container according to Claim 1 or claim 2, **characterized in that** the container body assembly is composed in several parts from two or more container bodies (3).

7. Multi-chamber container according to a combination of Claims 2 and 6, **characterized in that** the container bodies (3) are engaged with each other in a positive-locking manner so as to be able to be forcibly detached.

8. Multi-chamber container according to Claim 6, **characterized in that** at least one container body (3) has at least one undercut groove profile which cooperates in a positive-locking manner with a complementary rib profile of the adjacent container body (3).

9. Multi-chamber container according to one of Claims 6 to 8, **characterized in that** at least one container body (3) has at least one, preferably a plurality of locking studs, wherein a locking stud cooperates in the manner of a push-button connection with a stud receiving member which is constructed as a blind hole.

10. Multi-chamber container according to Claim 8, **characterized in that** the groove profile is constructed as a dovetail profile or cross-shaped profile or C-shaped profile with profile members which are constructed in a hook-like manner.

11. Multi-chamber container according to Claim 6, **characterized in that** the container bodies (3) are connected to each other by means of at least one stud (14) or at least one alignment pin, wherein the stud (14) or alignment pin extends through a hole (13) of at least one container body (3) and wherein the stud (14) or alignment pin has a desired breaking location.

12. Multi-chamber container according to Claim 11, **characterized in that** at least one of the container bodies (3) has a securing flange which is provided with a large number of holes (13) and **in that** at least one other body of the container bodies (3) has a large number of integrally formed studs (14) which engage in the holes (13) of the securing flange.

13. Multi-chamber container according to one of the preceding claims, **characterized in that** the multi-chamber container is formed from thermoplastic plastics material.

## Revendications

1. Récipient à plusieurs chambres, en matière synthétique, utilisé comme récipient à liquide de fonctionnement pour véhicule automobile, le récipient présentant
au moins deux chambres formant des volumes séparés ne communiquant pas hydrauliquement l'un avec l'autre, chacun étant sélectionné pour reprendre un liquide de fonctionnement dans l'ensemble constitué des carburants, des lubrifiants, des fluides de refroidissement, des liquides de nettoyage, des agents de réduction pour l'élimination des oxydes d'azote des gaz d'échappement ou utilisés comme additifs pour carburant,
au moins deux parois d'enveloppe des chambres étant adjacentes l'une à l'autre, les chambres faisant partie d'un ensemble combiné de corps de récipient, dans lequel le récipient à plusieurs chambres,
les parois d'enveloppe d'au moins deux chambres mutuellement adjacentes étant reliées l'une à l'autre en correspondance de matière par au moins un pont de matière et
**caractérisé en ce que**
la liaison est configurée de manière à se rompre automatiquement le long d'une ligne (4) de rupture préférentielle sous l'action de forces de déformation provoquées par une percussion, de telle sorte que l'ensemble de corps du récipient soit divisé en au moins deux parties séparées (2) de corps de récipient ou deux corps de récipient (3) le long de la ligne (4) de rupture préférentielle sous l'action de forces de déformation provoquées par une percussion.

2. Récipient à plusieurs chambres, en matière synthétique, utilisé comme récipient à liquide de fonctionnement pour véhicule automobile, le récipient présentant
au moins deux chambres formant des volumes séparés ne communiquant pas hydrauliquement l'un avec l'autre, chacun étant sélectionné pour reprendre un liquide de fonctionnement dans l'ensemble constitué des carburants, des lubrifiants, des fluides de refroidissement, des liquides de nettoyage, des agents de réduction pour l'élimination des oxydes d'azote des gaz d'échappement ou utilisés comme additifs pour carburant,
au moins deux parois d'enveloppe des chambres étant adjacentes l'une à l'autre, les chambres faisant partie d'un ensemble combiné de corps de récipient, dans lequel le récipient à plusieurs chambres
les parois d'enveloppe d'au moins deux chambres mutuellement adjacentes étant reliées l'une à l'autre en correspondance géométrique ou par des moyens de fixation et
**caractérisé en ce que**
la liaison est configurée de manière à se rompre automatiquement le long d'une ligne (4) de rupture préférentielle sous l'action de forces de déformation provoquées par une percussion, de telle sorte que l'ensemble de corps du récipient soit divisé en au moins deux parties séparées (2) de corps de récipient ou deux corps de récipient (3) le long de la ligne (4) de rupture préférentielle sous l'action de forces de déformation provoquées par une percussion.

3. Récipient à plusieurs chambres selon les revendications 1 ou 2, **caractérisé en ce que** les parties (2) de corps de récipient sont reliées l'une à l'autre par au moins un pont de matière (5) doté d'au moins une ligne (16) de perforations.

4. Récipient à plusieurs chambres selon les revendications 1 ou 2, **caractérisé en ce que** les parties (2) de corps de récipient sont reliées l'une à l'autre par au moins un pont de matière (5) configuré comme charnière (15) en feuille.

5. Récipient à plusieurs chambres selon les revendications 1 ou 2, **caractérisé en ce que** les parties (2) de corps de récipient sont reliées l'une à l'autre par au moins un pont de matière (5) constitué d'un matériau dont le module d'élasticité est de préférence plus grand que celui du matériau des parties (2) de corps de récipient.

6. Récipient à plusieurs chambres selon les revendications 1 ou 2, **caractérisé en ce que** l'ensemble de corps de récipient est constitué de l'assemblage de deux ou plusieurs corps (3) de récipient.

7. Récipient à plusieurs chambres selon une combinaison des revendications 2 et 6, **caractérisé en ce que** les corps (3) de récipient sont encliquetés l'un sur l'autre en correspondance géométrique en ne pouvant être détachés l'un de l'autre que de manière forcée.

8. Récipient à plusieurs chambres selon la revendication 6, **caractérisé en ce qu'**au moins un corps (3) de récipient présente au moins une rainure à profil en contre-dépouille qui coopère en correspondance géométrique avec un profil complémentaire en nervure du corps (3) de récipient voisin.

9. Récipient à plusieurs chambres selon l'une des revendications 6 à 8, **caractérisé en ce qu'**au moins un corps (3) de récipient présente au moins un et de préférence plusieurs tourillons d'accrochage élastique, un tourillon d'accrochage élastique coopérant à la manière d'une liaison à bouton poussoir avec un logement de tourillon configuré comme trou aveugle.

10. Récipient à plusieurs chambres selon la revendication 8, **caractérisé en ce que** le profil de rainure est configuré comme profil en queue d'aronde, profilé en croix ou profil en creux dont les branches sont configurées en forme de crochet.

11. Récipient à plusieurs chambres selon la revendication 6, **caractérisé en ce que** les corps (3) de récipient sont reliés l'un à l'autre par au moins un tourillon (14) ou au moins une tige d'adaptation, le tourillon (14) ou la tige d'adaptation traversant un trou (13) ménagé dans au moins un corps (3) de récipient, le tourillon (14) ou la tige d'adaptation présentant un emplacement de rupture préférentielle.

12. Récipient à plusieurs chambres selon la revendication 11, **caractérisé en ce qu'**au moins l'un des corps (3) de récipient présente une bride de fixation dotée de plusieurs trous (13) et **en ce qu'**au moins un autre des corps (3) de récipient présente plusieurs tourillons (14) formés d'un seul tenant avec lui et qui engagent les trous (13) de la bride de fixation.

13. Récipient à plusieurs chambres selon l'une des revendications précédentes, **caractérisé en ce que** le récipient à plusieurs chambres est réalisé en une matière synthétique thermoplastique.
